# EUROPEAN PATENT APPLICATION

(11) **EP 4 518 227 A1**
(43) Date of publication of application: **05.03.2025**
(21) Application number: 23796836.7
(22) Date of filing: 27.04.2023
(51) Int. Cl.: H04L 5/00, H04L 27/26, H04W 4/40

(54) **METHOD AND DEVICE FOR TRANSMITTING AND RECEIVING SIGNALS IN WIRELESS COMMUNICATION SYSTEM**

(30) Priority: 28.04.2022 KR 20220053014
(71) Applicant: LG Electronics Inc., Yeongdeungpo-gu Seoul 07336 (KR)
(72) Inventor: YANG, Suckchel, Seoul 06772 (KR); LEE, Seungmin, Seoul 06772 (KR); HWANG, Daesung, Seoul 06772 (KR); KIM, Seonwook, Seoul 06772 (KR); SHIN, Seokmin, Seoul 06772 (KR)
(74) Representative: Frenkel, Matthias Alexander
(86) International application number: PCT/KR2023/005772
(87) International publication number: WO 2023/211194

(57) **Abstract**

According to at least one of various embodiments of the present invention, a terminal may: receive sidelink data from another terminal through a PSSCH; and transmit HARQ feedback information about the reception of the sidelink data through a PSFCH. A plurality of symbols may be allocated for the PSFCH transmission on the basis that the PSFCH transmission is performed on a shared spectrum, and OCCs may be applied to all of the plurality of symbols allocated for the PSFCH transmission, with the exception of a first symbol.

## Description

### TECHNICAL FIELD

The present disclosure relates to a wireless communication system, and more particularly, to a method and apparatus for transmitting or receiving a downlink/uplink radio signal in a wireless communication system.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

In an aspect of the present disclosure, provided herein is a method of transmitting hybrid automatic repeat request (HARQ) feedback information by a user equipment (UE) in a wireless communication system. The method may include: receiving sidelink data from another UE through a physical sidelink shared channel (PSSCH); and transmitting HARQ feedback information for the reception of the sidelink data through a physical sidelink feedback channel (PSFCH). Based on that the PSFCH transmission is performed on a shared spectrum, a plurality of symbols may be allocated for the PSFCH transmission. An orthogonal covering code (OCC) may be applied to remaining symbols except for a first symbol among the plurality of symbols allocated for the PSFCH transmission.

The first symbol may be an earliest symbol in a time domain among the plurality of symbols.

A number of the plurality of symbols allocated for the PSFCH transmission may be N + 1, and a length of the OCC may be N, where N may be an integer 2

The plurality of symbols allocated for the PSFCH transmission may be time-division multiplexed (TDMed) within a same sidelink slot.

A same PSFCH sequence may be repeated in at least two symbols among the plurality of symbols.

The OCC may be applied independently to each of resource blocks (RBs) allocated for the PSFCH transmission.

A first OCC may be applied to a first RB among the RBs, and a second OCC may be applied to a second RB among the RBs.

In another aspect of the present disclosure, provided herein is a computer-readable recording medium having recorded thereon a program for performing the HARQ feedback transmission method described above.

In another aspect of the present disclosure, provided herein is a UE configured to perform the HARQ feedback transmission method described above.

In another aspect of the present disclosure, provided herein is a device configured to control a UE performing the HARQ feedback transmission method described above.

In another aspect of the present disclosure, provided herein is a method of receiving HARQ feedback information by a UE in a wireless communication system. The method may include: transmitting sidelink data to another UE over a PSSCH; and receiving HARQ feedback information for the transmission of the sidelink data over a PSFCH. Based on that the PSFCH reception is performed on a shared spectrum, a plurality of symbols may be allocated for the PSFCH reception. An OCC may be applied to remaining symbols except for a first symbol among the plurality of symbols allocated for the PSFCH reception.

In a further aspect of the present disclosure, provided herein is a UE configured to perform the HARQ feedback reception method described above.

### ADVANTAGEOUS EFFECTS

According to at least one of various embodiments wireless signal transmission/reception procedures can be performed efficiently.

It will be appreciated by persons skilled in the art that the technical effects that could be achieved with the present disclosure are not limited to what has been particularly described hereinabove and the above and other technical effects that the present disclosure could achieve will be more clearly understood from the following detailed description.

### BRIEF DESCRIPTION OF THE DRAWINGS

FIG. 1 illustrates physical channels used in a 3rd generation partnership project (3GPP) system as an exemplary wireless communication system, and a general signal transmission method using the same;
FIG. 2 illustrates a radio frame structure;
FIG. 3 illustrates a resource grid of a slot;
FIG. 4 illustrates exemplary mapping of physical channels in a slot;
FIG. 5 illustrates an exemplary acknowledgment/negative acknowledgment (ACK/NACK) transmission process;
FIG. 6 illustrates an exemplary physical uplink shared channel (PUSCH) transmission process;
FIG. 7 illustrates a method of occupying resources in an unlicensed band;
FIG. 8 illustrates a flow of a Type 1 channel access procedure (CAP) operation of a user equipment (UE) for uplink signal transmission (e.g., channel access based on listen-before-talk (LBT));
FIG. 9 illustrates a radio protocol architecture for sidelink (SL) communication;
FIG. 10 illustrates a synchronization source or synchronization reference for V2X communication;
FIG. 11 illustrates a procedure in which a UE performs vehicle-to-everything (V2X) or SL communication depending on a transmission mode;
FIG. 12 illustrates a flow of a method by which a UE transmits hybrid automatic repeat request (HARQ) feedback according to an embodiment;
FIG. 13 illustrates a flow of a method by which a UE receives HARQ feedback according to an embodiment; and
FIGS. 14 to 17 illustrate a communication system 1 and wireless devices applicable to the present disclosure.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration," and both may be used interchangeably. Further, a conditional expression (e.g., "if", "in a case", or "when") may be replaced by "based on that" or "in a state/status." In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

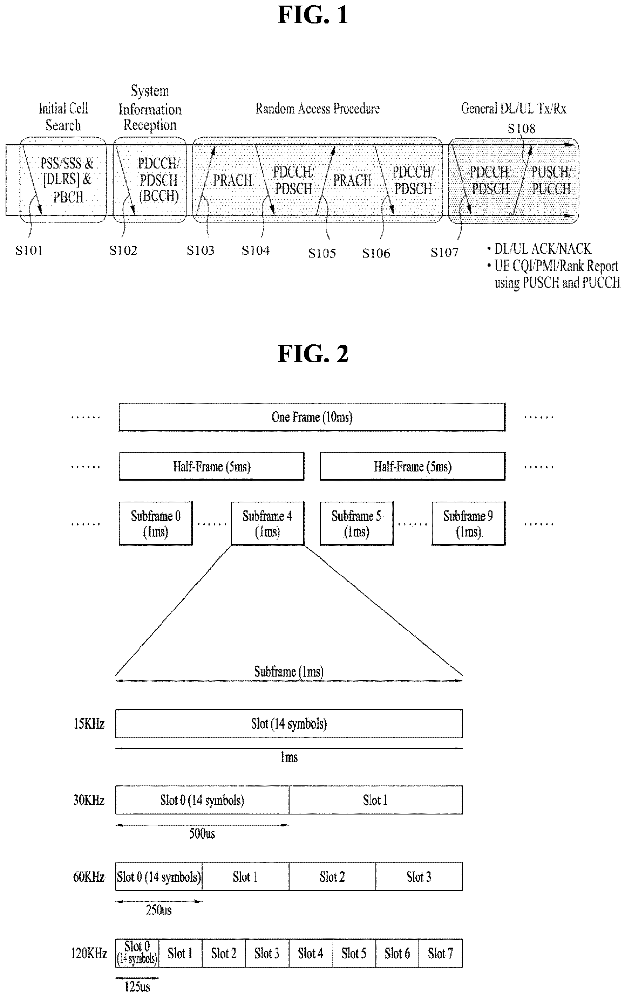

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The purpose of the random access procedure (RACH procedure) is not limited to initial network access (e.g., S103 to S106). That is, the random access procedure may be used for various purposes. For example, the random access procedure may be used for at least one of an RRC connection re-establishment procedure, handover, UE-triggered UL data transmission, transition from RRC_INACTIVE, SCell time alignment, system information request, beam failure recovery, or UL resource request. However, the random access procedure is not limited thereto. The UE may acquire UL synchronization and/or UL transmission resources from the random access procedure.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N ^{slot}_{symb}: Number of symbols in a slot * N ^{frame,u}ₛₗₒₜ: Number of slots in a frame * N ^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

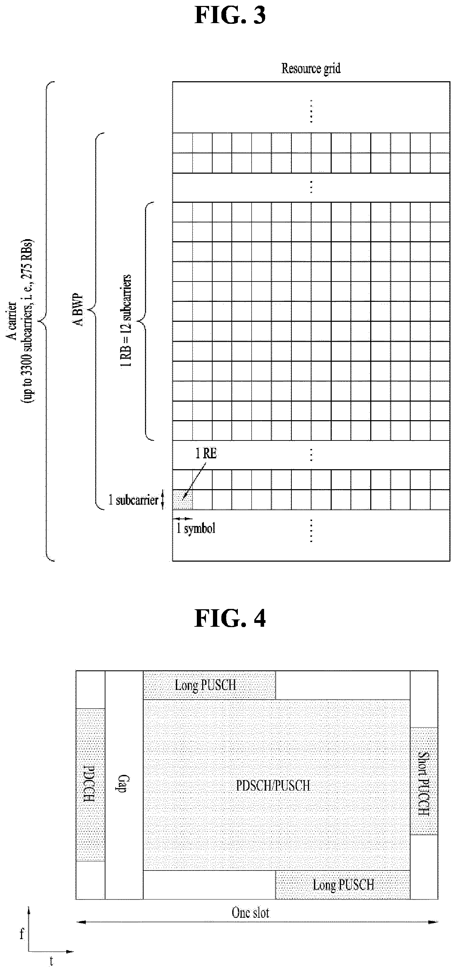

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.
- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

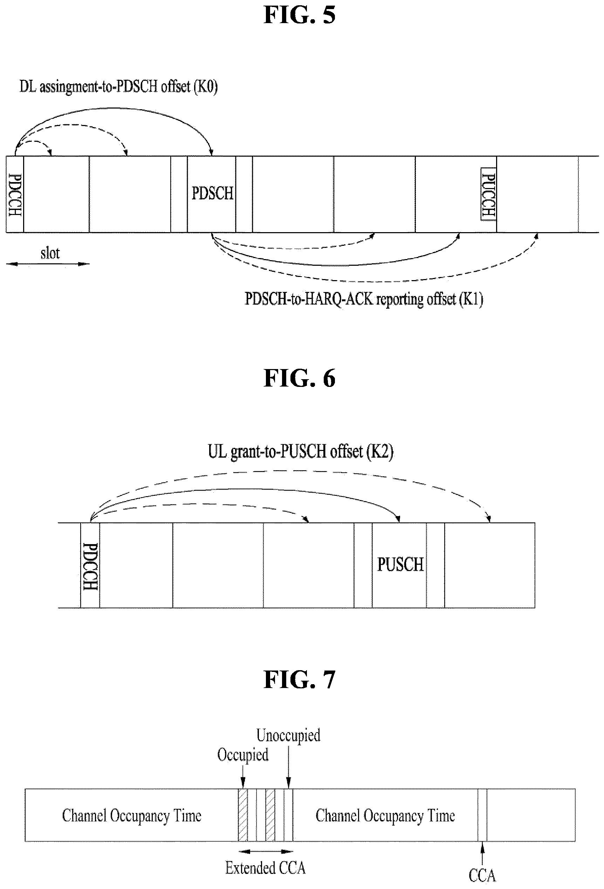

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.
- Frequency domain resource assignment: Indicates an RB set assigned to a PDSCH
- Time domain resource assignment: Indicates K0 and the starting position (e.g., OFDM symbol index) and length (e.g., the number of OFDM symbols) of the PDSCH in a slot.
- PDSCH-to-HARQ_feedback timing indicator: Indicates K1.
- HARQ process number (4 bits): Indicates the HARQ process ID of data (e.g., a PDSCH or TB).

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information
- Frequency domain resource assignment: Indicates an RB set assigned to the PUSCH
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

NR-shared spectrum/unlicensed band (NR-U) operation
- Channel: A carrier or a part of a carrier including consecutive RBs in which a channel access procedure (CAP) is performed in a shared spectrum
- Channel access procedure (CAP): A procedure of evaluating the availability of a channel based on sensing to determine whether the channel is used by other communication node(s) before a signal transmission. A basic unit for sensing is a sensing slot with a duration Tsl of 9us. The sensing slot duration Tsl may be considered to be idle when a BS or a UE senses the channel during the sensing slot duration, and power detected for at least 4us within the sensing slot duration is less than an energy detection threshold XThresh. Otherwise, the sensing slot duration Tsl of 9us may be considered to be busy. A CAP may be referred to as listen-before-talk (LBT).
- Channel occupancy: Transmission(s) on channel(s) from a BS/UE after a CAP.
- Channel occupancy time (COT): A total time for which the BS/UE and any BS/UE(s) sharing the channel occupancy perform transmission(s) on the channel after the BS/UE corresponding CAPs. When a COT is determined, if a transmission gap is less than or equal to 25us, the gap duration may also be counted in the COT. The COT may be shared for transmission between the BS and corresponding UE(s).
- DL transmission burst: A set of transmissions from the BS without any gaps greater than 16us. Transmissions from the BS separated by a gap of more than 16us are considered as separate DL transmission bursts. The BS may perform transmission(s) after a gap within a DL transmission burst without sensing channel availability.
- UL transmission burst: A set of transmissions from the UE without any gaps greater than 16us. Transmissions from the UE separated by a gap of more than 16us are considered as separate UL transmission bursts. The UE may perform transmission(s) after a gap within a UL transmission burst without sensing channel availability.
- Discovery burst: A DL transmission burst including a set of signal(s) and/or channel(s) confined within a window and associated with a duty cycle. In the LTE-based system, a discovery burst may be transmission(s) initiated by a BS, including a primary synchronization signal (PSS), a secondary synchronization signal (SSS) and a cell-specific reference signal (CRS) and further including a non-zero power CSI-RS. In the NR-based system, a discovery burst may be transmission(s) initiated by a BS, including at least an SS/PBCH block and further including a CORESET for a PDCCH scheduling a PDSCH with SIB1, a PDSCH carrying SIB1, and/or non-zero power CS-RS.

FIG. 7 illustrates a method of occupying resources in an unlicensed band. According to regional regulations concerning the unlicensed band, a communication node in the unlicensed band needs to determine, before signal transmission, whether other communication nodes use a channel. Specifically, the communication node may first perform carrier sensing (CS) before signal transmission to check whether other communication nodes transmit signals. If it is determined that other communication nodes do not transmit signals, this means that clear channel assessment (CCA) is confirmed. When there is a predefined CCA threshold or a CCA threshold configured by higher layer (e.g., RRC) signaling, if energy higher than the CCA threshold is detected in a channel, the communication node may determine that the channel is in a busy state and, otherwise, the communication node may determine that the channel is in an idle state. For reference, in Wi-Fi standard (802.11ac), the CCA threshold is set to -62dBm for a non-Wi-Fi signal and to -82dBm for a Wi-Fi signal. Upon determining that the channel is in an idle state, the communication node may start to transmit signals in the UCell. The above processes may be referred to as listen-before-talk (LBT) or a channel access procedure (CAP). LBT and CAP may be used interchangeably.

### (1) Type 1 DL CA

In a Type 1 DL CAP, a time duration spanned by sensing slots that are sensed to be idle before DL transmission(s) is random. The Type 1 DL CAP is applicable to the following transmissions
- Transmission(s) initiated by a BS including (i) a unicast PDSCH with user plane data or (ii) a unicast PDSCH with user plane data and a unicast PDCCH scheduling user plane data, o
- Transmission(s) initiated by a BS with (i) only a discovery burst or with (ii) a discovery burst multiplexed with non-unicast information.

### (2) Type 2 DL CAP

In a Type 2A/2B DL CAP, when sensing a channel to be idle during at least a sensing duration of 25us, the BS may perform a DL transmission in an unlicensed band immediately after the sensing is completed. In a Type 2C DL CAP, the BS may immediately access a channel without sensing.

### (1) Type 1 UL CAP

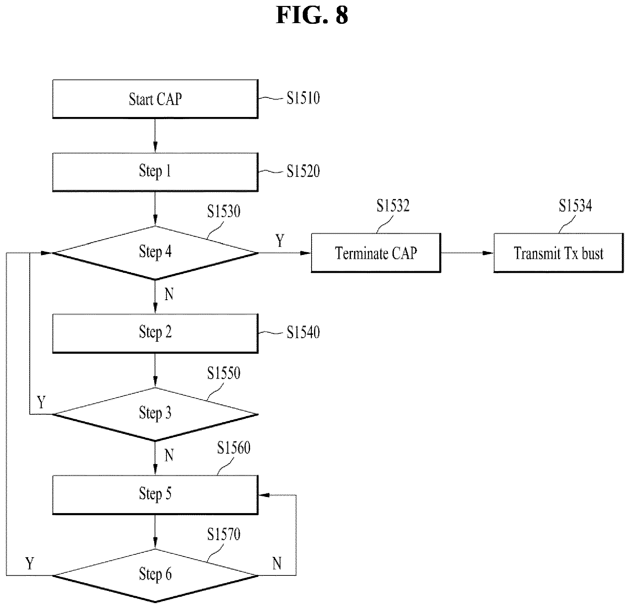

With reference to FIG. 8, the Type 1 UL CAP of Table 6 will be described in greater detail. For a signal transmission in an unlicensed band, a UE may initiate a CAP (S1510). The UE may select a backoff counter N randomly within a CW according to step 1. N is set to an initial value Ninit (S1520). Ninit is a value randomly selected between 0 and CWp. Subsequently, when the backoff counter value N is 0 according to step 4 (S1530; Y), the UE ends the CAP (S1532). The UE may then transmit a Tx burst (S1534). On the other hand, if the backoff counter value is not 0 (S1530; N), the UE decrements the backoff counter value by 1 according to step 2 (S1540). Subsequently, the UE checks whether a channel of UCell(s) is idle (S1550). If the channel is idle (S1550; Y), the UE checks whether the backoff counter value is 0 (S1530). On the contrary, if the channel is not idle, that is, the channel is busy (S1550; N), the UE checks whether the channel is idle for a defer duration Td (of 25usec or more) longer than a slot duration (e.g., 9usec) according to step 5 (S1560). If the channel is idle for the defer duration (S1570; Y), the UE may resume the CAP. The defer duration may include a duration of 16µsec and following Mp consecutive slot durations (e.g., 9µs). On the contrary, when the channel is busy during the defer duration (S1570; N), the UE checks whether the channel is idle during a new defer duration by performing step S1560 again.

### (2) Type2 UL CAP

When sensing a channel to be idle at least during a sensing duration T_{short_ul} of 25us, the UE may perform a UL transmission (e.g., PUSCH) in an unlicensed band immediately after the sensing is completed. T_{short_ul} may be Tₛₗ (=9us) + T_{f} (=16us).

### NR-Sidelink/V2X

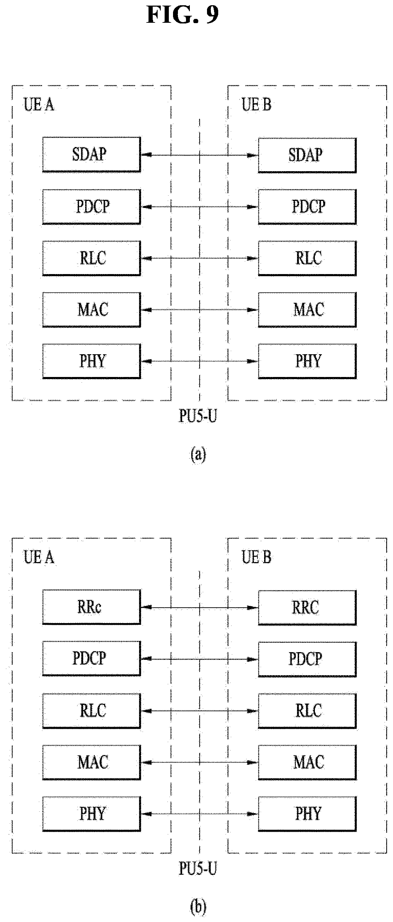

FIG. 9 illustrates a radio protocol architecture for SL communication according to an embodiment of the present disclosure. Specifically, FIG. 9(a) illustrates a user-plane protocol stack in NR, and FIG. 9(b) illustrates a control-plane protocol stack in NR.

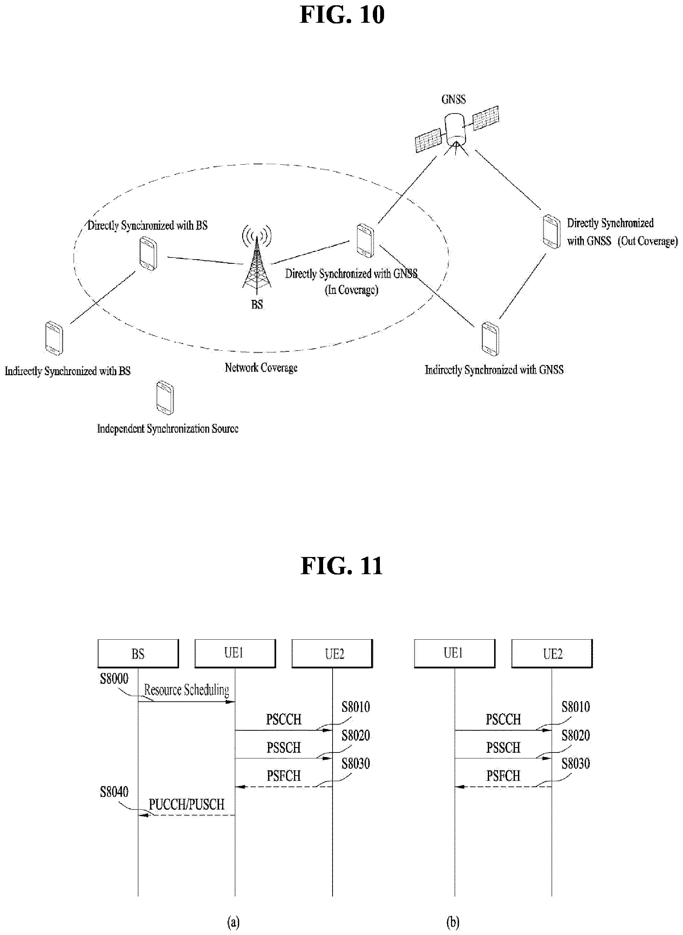

FIG. 10 illustrates a synchronization source or synchronization reference of V2X according to an embodiment of the present disclosure.

Referring to FIG. 10, in V2X, a UE may be directly synchronized with global navigation satellite systems (GNSS). Alternatively, the UE may be indirectly synchronized with the GNSS through another UE (within or out of network coverage). If the GNSS is configured as a synchronization source, the UE may calculate a direct frame number (DFN) and a subframe number based on a coordinated universal time (UTC) and a configured (or preconfigured) DFN offset.

Alternatively, a UE may be directly synchronized with a BS or may be synchronized with another UE that is synchronized in time/frequency with the BS. For example, the BS may be an eNB or a gNB. For example, when a UE is in network coverage, the UE may receive synchronization information provided by the BS and may be directly synchronized with the BS. Next, the UE may provide the synchronization information to another adjacent UE. If a timing of the BS is configured as a synchronization reference, the UE may follow a cell associated with a corresponding frequency (when the UE is in cell coverage in frequency) or a primary cell or a serving cell (when the UE is out of cell coverage in frequency), for synchronization and DL measurement.

The BS (e.g., serving cell) may provide a synchronization configuration for a carrier used for V2X/SL communication. In this case, the UE may conform to the synchronization configuration received from the BS. If the UE fails to detect any cell in the carrier used for V2X/SL communication and fails to receive the synchronization configuration from the serving cell, the UE may conform to a preset synchronization configuration.

Alternatively, the UE may be synchronized with another UE that has failed to directly or indirectly acquire the synchronization information from the BS or the GNSS. A synchronization source and a preference may be preconfigured for the UE. Alternatively, the synchronization source and the preference may be configured through a control message provided by the BS.

Hereinafter, a sidelink synchronization signal (SLSS) and synchronization information will be described.

As an SL-specific sequence, the SLSS may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may use the S-PSS to detect an initial signal and obtain synchronization. In addition, the UE may use the S-PSS and the S-SSS to obtain detailed synchronization and detect a synchronization signal ID.

A physical sidelink broadcast channel (PSBCH) may be a (broadcast) channel for transmitting default (system) information that the UE needs to know first before transmitting and receiving SL signals. For example, the default information may include information related to an SLSS, a duplex mode (DM), a time division duplex (TDD) UL/DL configuration, information related to a resource pool, an application type related to the SLSS, a subframe offset, broadcast information, etc. For example, for evaluation of PSBCH performance in NR V2X, the payload size of the PSBCH may be 56 bits including a CRC of 24 bits.

The S-PSS, S-SSS, and PSBCH may be included in a block format (e.g., SL synchronization signal (SS)/PSBCH block) supporting periodical transmission (hereinafter, the SL SS/PSBCH block is referred to as a sidelink synchronization signal block (S-SSB)). The S-SSB may have the same numerology (i.e., SCS and CP length) as that of a physical sidelink control channel (PSCCH)/physical sidelink shared channel (PSSCH) on a carrier, and the transmission bandwidth may exist within a configured (or preconfigured) SL BWP. For example, the S-SSB may have a bandwidth of 11 RBs. For example, the PSBCH may span 11 RBs. In addition, the frequency position of the S-SSB may be configured (or preconfigured). Therefore, the UE does not need to perform hypothesis detection on frequency to discover the S-SSB on the carrier.

The NR SL system may support a plurality of numerologies with different SCSs and/or different CP lengths. In this case, as the SCS increases, the length of a time resource used by a transmitting UE to transmit the S-SSB may decrease. Accordingly, the coverage of the S-SSB may be reduced. Therefore, in order to guarantee the coverage of the S-SSB, the transmitting UE may transmit one or more S-SSBs to a receiving UE within one S-SSB transmission period based on the SCS. For example, the number of S-SSBs that the transmitting UE transmits to the receiving UE within one S-SSB transmission period may be pre-configured or configured for the transmitting UE. For example, the S-SSB transmission period may be 160 ms. For example, an S-SSB transmission period of 160 ms may be supported for all SCSs.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

FIG. 11 illustrates a procedure of performing V2X or SL communication by a UE depending on a transmission mode according to an embodiment of the present disclosure. The embodiment of FIG. 11 may be combined with various embodiments of the present disclosure. In various embodiments of the present disclosure, a transmission mode may be referred to as a mode or a resource allocation mode. For the convenience of the following description, a transmission mode in LTE may be referred to as an LTE transmission mode, and a transmission mode in NR may be referred to as an NR resource allocation mode.

For example, FIG. 11(a) illustrates a UE operation related to LTE transmission mode 1 or LTE transmission mode 3. Alternatively, for example, FIG. 11(a) illustrates a UE operation related to NR resource allocation mode 1. For example, LTE transmission mode 1 may apply to general SL communication, and LTE transmission mode 3 may apply to V2X communication.

For example, FIG. 11(b) illustrates a UE operation related to LTE transmission mode 2 or LTE transmission mode 4. Alternatively, for example, FIG. 11(b) illustrates a UE operation related to NR resource allocation mode 2.

Referring to FIG. 11(a), in LTE transmission mode 1, LTE transmission mode 3, or NR resource allocation mode 1, a BS may schedule an SL resource to be used for SL transmission by a UE. For example, in step S8000, the BS may transmit information related to an SL resource and/or information related to a UE resource to a first UE. For example, the UL resource may include a PUCCH resource and/or a PUSCH resource. For example, the UL resource may be a resource to report SL HARQ feedback to the BS.

For example, the first UE may receive information related to a Dynamic Grant (DG) resource and/or information related to a Configured Grant (CG) resource from the BS. For example, the CG resource may include a CG type 1 resource or a CG type 2 resource. In the present specification, the DG resource may be a resource configured/allocated by the BS to the first UE in Downlink Control Information (DCI). In the present specification, the CG resource may be a (periodic) resource configured/allocated by the BS to the first UE in DCI and/or an RRC message. For example, for the CG type 1 resource, the BS may transmit an RRC message including information related to the CG resource to the first UE. For example, for the CG type 2 resource, the BS may transmit an RRC message including information related to the CG resource to the first UE, and the BS may transmit DCI for activation or release of the CG resource to the first UE.

In step S8010, the first UE may transmit a PSCCH (e.g., Sidelink Control Information (SCI) or 1st-stage SCI) to a second UE based on the resource scheduling. In step S8020, the first UE may transmit a PSSCH (e.g., 2nd-stage SCI, MAC PDU, data, etc.) related to the PSCCH to the second UE. In step S8030, the first UE may receive a PSFCH related to the PSCCH/PSSCH from the second UE. For example, HARQ feedback information (e.g., NACK information or ACK information) may be received from the second UE over the PSFCH. In step S8040, the first UE may transmit/report HARQ feedback information to the BS over a PUCCH or PUSCH. For example, the HARQ feedback information reported to the BS may include information generated by the first UE based on HARQ feedback information received from the second UE. For example, the HARQ feedback information reported to the BS may include information generated by the first UE based on a preset rule. For example, the DCI may be a DCI for scheduling of SL. For example, the format of the DCI may include DCI format 3_0 or DCI format 3_1.

Referring to FIG. 11 (b), in an LTE transmission mode 2, an LTE transmission mode 4, or an NR resource allocation mode 2, a UE may determine an SL transmission resource within an SL resource configured by a BS/network or a preconfigured SL resource. For example, the configured SL resource or the preconfigured SL resource may be a resource pool. For example, the UE may autonomously select or schedule resources for SL transmission. For example, the UE may perform SL communication by selecting a resource by itself within a configured resource pool. For example, the UE may perform sensing and resource (re)selection procedures to select a resource by itself within a selection window. For example, the sensing may be performed in unit of a sub-channel. For example, in the step S8010, the first UE having self-selected a resource in the resource pool may transmit PSCCH (e.g., Side Link Control Information (SCI) or 1st-stage SCI) to the second UE using the resource. In the step S8020, the first UE may transmit PSSCH (e.g., 2nd-stage SCI, MAC PDU, data, etc.) related to the PSCCH to the second UE. In the step S8030, the first UE may receive PSFCH related to the PSCCH/PSSCH from the second UE.

Referring to FIG. 11 (a) or FIG. 11 (b), for example, the first UE may transmit the SCI to the second UE on the PSCCH. Alternatively, for example, the first UE may transmit two consecutive SCIs (e.g., two-stage SCI) to the second UE on the PSCCH and/or PSSCH. In this case, the second UE may decode the two consecutive SCIs (e.g., two-stage SCI) to receive the PSSCH from the first UE. In the present specification, the SCI transmitted on the PSCCH may be referred to as a 1st SCI, a 1st-stage SCI, or a 1st-stage SCI format, and the SCI transmitted on the PSSCH may be referred to as a 2nd SCI, a 2nd SCI, a 2nd-stage SCI format. For example, the 1st-stage SCI format may include SCI format 1-A, and the 2nd-stage SCI format may include SCI format 2-A and/or SCI format 2-B.

Referring to FIG. 11 (a) or FIG. 11(b), in step S8030, a first UE may receive a PSFCH. For example, the first UE and a second UE may determine a PSFCH resource, and the second UE may transmit HARQ feedback to the first UE on the PSFCH resource.

Referring to FIG. 11 (a), in step S8040, the first UE may transmit SL HARQ feedback to the BS over a PUCCH and/or PUSCH.

### PSFCH Structure for Sidelink Operation in Shared Spectrum

In the next (Rel-18) NR system, it may be considered to support communication operations based on sidelink (SL) transmission in an unlicensed band (U-band). To this end, SL transmission that complies with the regulations/requirements specified in the U-band (related to channel access and transmission based on LBT operation) may be required. As an example of requirements related to transmission in the U-band, there is a power spectral density (PSD) requirement that limits the maximum transmittable power per unit frequency (e.g., 1 MHz) to a specific level (e.g., below 10 dBm). There is also an occupied channel bandwidth (OCB) requirement that mandates the frequency band occupied by a transmission signal needs to be at least Z% (e.g., Z = 80) of a nominal system bandwidth (BW). However, in the case of a PSFCH, which is defined for HARQ-ACK feedback transmission for PSCCH/PSSCH transmission/reception in the existing SL operation scenario, the transmission resources are configured with only 1 RB. As a result, it may not be possible to perform transmission that meets the aforementioned PSD/OCB requirements.

Accordingly, an efficient PSFCH resource structure is proposed to enable transmission using the maximum power supported/configurable for a SL UE while complying with the PSD/OCB requirements in the U-band. Additionally, a PSFCH resource structure is proposed to compensate for a decrease in the PSFCH multiplexing capacity in the frequency domain that may arise from configuring resources to meet the PSD/OCB requirements.
1) A single PSFCH resource may be configured with multiple RBs, and the multiple RBs may consist of contiguous RBs in the frequency domain or non-contiguous RBs that are evenly spaced (such an RB set is defined as an RB-interlace) (accordingly, it is possible to perform transmission based on the maximum power of the SL UE while satisfying the PSD/OCB requirements).
   A. In this case, the single PSFCH resource may consist of two (OFDM) symbols in the time domain, where the same sequence (with a length of 1 RB (12 REs), which is generated by applying a different cyclic shift to each RB,) is repeatedly mapped (for each RB). Among the two symbols, the first symbol (in the time domain) may be used for automatic gain control (AGC) operation of the reception (Rx) UE.
2) Alternatively, a single PSFCH resource may be configured with multiple RE groups (REGs), when the REG consists of one or more contiguous REs in the frequency domain (to compensate for a decrease in the multiplexing capacity caused by a resource structure occupying multiple RBs).
   A. The multiple REGs may be composed of contiguous REGs in the frequency domain or non-contiguous REGs with evenly spaced intervals (such an REG set is defined as an REG-interlace). The number of REs included in a single REG, denoted as M, may be smaller than the number of REs in a single RB. For example, M may be set to one of the values 6, 3, or 2, or M may be set to M = 1.
3) As another method, a single PSFCH resource may be configured with two symbols, while multiple (e.g., N) time-division multiplexed (TDMed) PSFCH resources may be configured within a single SL (PSFCH) slot (to compensate for a decrease in the multiplexing capacity caused by a resource structure occupying multiple RBs).
   A. In this case, a gap corresponding to K symbols (e.g., K = 1) may be configured between two TDMed PSFCH resources that are adjacent in time within the same SL (PSFCH) slot, considering Tx-Rx switching operation and/or LBT operation for channel access.
   B. In this case, an RB group for configuring PSFCH resources (within a single SL slot) is configured per SL resource pool. When the RB group is partitioned into multiple RB subgroups based on a PSFCH resource period (e.g., the number of PSSCH transmission slots associated/linked with a single PSFCH occasion) and the number of PSSCH frequency resources (e.g., the number of sub-channels), the PSFCH resources may be indexed for RB subgroup(s) associated/linked with the (lowest) sub-channel(s) used for PSSCH transmission according to a combination of the RB (REG)-interlace index, cyclic shift (pair) index, and PSFCH configuration symbol index (TDMed within an SL slot).

   - Specifically, the PSFCH resource indexing may be performed by first incrementing the indices in the following order: RB (REG)-interlace index first - cyclic shit index second - PFSCH symbol index third (or PSFCH symbol index second - cyclic shift index third); PFSCH symbol index first - RB (REG)-interlace index second - cyclic shit index third (or cyclic shit index second - RB (REG)-interlace index third); or cyclic shit index first - RB (REG)-interlace index second - PFSCH symbol index third (or PFSCH symbol index second - RB (REG)-interlace index third.
4) As another method, a single PSFCH resource may be configured with three symbols, where the same sequence is repeatedly mapped onto the second and third symbols (in the time domain) (for each RB) (to compensate for a decrease in the multiplexing capacity caused by a resource structure occupying multiple RBs). A length-2 time domain orthogonal cover code (OCC) may be applied (multiplied) across the two symbols, thereby performing transmission (by configuring the single PSFCH resource).
   A. In this case, a sequence signal generated on the second (or third) symbol as described above may be identically repeated and mapped onto the first symbol. The first symbol may then be used for the AGC operation of the Rx UE.
   B. This may be generalized as follows. A single PSFCH resource may be configured with N+1 symbols, where the same sequence is repeatedly mapped from the second symbol to the last (N+1)-th symbol (for each RB). An OCC of length N is applied across the N symbols, thereby performing transmission (by configuring the single PSFCH resource).
      - Additionally, a sequence signal generated on the second (or (N+1)-th) symbol may be identically repeated and mapped onto the first symbol to configure an AGC symbol.
   C. In this case, an RB group for configuring PSFCH resources (within a single SL slot) is configured per SL resource pool. When the RB group is partitioned into multiple RB subgroups based on a PSFCH resource period (e.g., the number of PSSCH transmission slots associated/linked with a single PSFCH occasion) and the number of PSSCH frequency resources (e.g., the number of sub-channels), the PSFCH resources may be indexed for RB subgroup(s) associated/linked with the (lowest) sub-channel(s) used for PSSCH transmission according to a combination of the RB (REG)-interlace index, cyclic shift (pair) index, and OCC index.
   D. Specifically, the PSFCH resource indexing may be performed by first incrementing the indices in the following order: RB (REG)-interlace index first - cyclic shit index second - OCC index third (or OCC index second - cyclic shit index third); OCC index first - RB (REG)-interlace index second - cyclic shit index third (or cyclic shit index second - RB (REG)-interlace index third); or cyclic shit index first - RB (REG)-interlace index second - OCC index third (or OCC index second - RB (REG)-interlace index third).
5) If the length-2 OCC applied across the second and third symbols (e.g., vector of index 0 = [+1, +1] or index 1 = [+1, -1]) is applied in the same form to all multiple RBs (belonging to the same PSFCH resource), the difference in power between a received signal measured from the first AGC symbol and signals received through the second and third symbols may become significant, potentially causing issues with reception performance.
   A. Therefore, to address the AGC issue mentioned above, the following elements may be configured differently for each RB (within the same PSFCH resource): the form (index) of the length-2 OCC applied across the second and third symbols; the order of the symbols (indices) to which the OCC (sequence) is applied (multiplied); and/or a sequence signal that is repeatedly mapped to the AGC symbol (and the index of the symbol in which the signal is generated).
   B. This may be generalized as follows. The following elements may be configured differently for each RB (within the same PSFCH resource): the form (index) of the length-N OCC applied across the N symbols (from the second to the (N+1)-th symbol); the order of the symbols (indices) to which the OCC (sequence) is applied; and/or a sequence signal that is repeatedly mapped to the AGC symbol (and the index of the symbol in which the signal is generated).
   C. Opt 1
      - For multiple RBs, (two) different PSFCH resources may be configured by applying (multiplying) different OCC indices (e.g., index 0 = [+1, +1] or index 1 = [+1, -1]) to the [second, third] symbols in sequence. In this case, for some of the multiple RBs (e.g., RB subset #0), the sequence signal on the second symbol may be identically repeated and mapped onto the first symbol to form the AGC symbol, while for other RBs (e.g., RB subset #1), a sequence signal on the third symbol may be identically repeated and mapped onto the first symbol to configure the AGC symbol.
      - This may be generalized as follows. Different (N) PSFCH resources may be configured for the multiple RBs by applying different (length-N) OCC indices in the following order: [second, third, ..., (N+1)-th] symbols. In this case, for specific RB subset, RB subset #A, a sequence signal on a specific K-th symbol may be identically repeated and mapped onto the first symbol to configure the AGC symbol. For another RB subset, RB subset #B, a sequence signal from a different L-th symbol (not the K-th symbol) may be identically repeated and mapped onto the first symbol to configure the AGC symbol.
   D. Opt 2
      - For multiple RBs, a single PSFCH resource may be configured such that for some RBs (e.g., RB subset #0) of the multiple RBs, OCC index x (e.g., index 0 = [+1, +1]) is applied (multiplied) in the order of [second, third] symbols, while for other RBs (e.g., RB subset #1), the same OCC index, OCC index x is applied in the reverse order of [third, second] symbols. For the same multiple RBs, another PSFCH resource may be configured such that for RB subset #0, OCC index y (e.g., index 1 = [+1, -1]) is applied in the order of [second, third] symbols, while for RB subset #1, OCC index y is applied in the reverse order of [third, second] symbols.
      - This may be generalized as follows. For the multiple RBs, a single PSFCH resource may be configured such that for RB subset #A, OCC index x = [x1, x2, ..., xN] is applied in the order of [second, third, ..., (N+1)-th] symbols, while for RB subset #B, the same OCC index, OCC index x is applied in the reverse order of [(N+1)-th, N-th, ..., second] symbols. For the same multiple RBs, another PSFCH resource may be configured such that for RB subset #A, OCC index y = [y1, y2, ..., yN] is applied in the order of [second, third, ..., (N+1)-th] symbols, while for RB subset #B, OCC index y is applied in the reverse order of [(N+1)-th, N-th, ..., second] symbols.
   E. Opt 3
      - For multiple RBs, a single PSFCH resource may be configured such that for RB subset #0: OCC index x (e.g., index 0 = [+1, +1]) is applied (multiplied) in the order of [second, third] symbols, while for RB subset #1, OCC index y (e.g., index 1 = [+1, -1]) is applied (multiplied) in the order of [second, third] symbols. For the same multiple RBs, another PSFCH resource may be configured such that for RB subset #0, OCC index y is applied (multiplied) in the order of [third, second] symbols, while for RB subset #1: OCC index x is applied (multiplied) in the order of [third, second] symbols.
      - This may be generalized as follows. For the multiple RBs, a single PSFCH resource may be configured such that for RB subset #A, OCC index x = [x1, x2, ..., xN] is applied in the order of [second, third, ..., (N+1)-th] symbols, while for RB subset #B: OCC index y = [y1, y2, ..., yN] is applied in the same order of [second, third, ..., (N+1)-th] symbols. For the same multiple RBs, another PSFCH resource may be configured such that for RB subset #A: OCC index y is applied in the reverse order of [(N+1)-th, N-th, ..., second] symbols, while for RB subset #B: OCC index x is applied in the same reverse order of [(N+1)-th, N-th, ..., second] symbols.

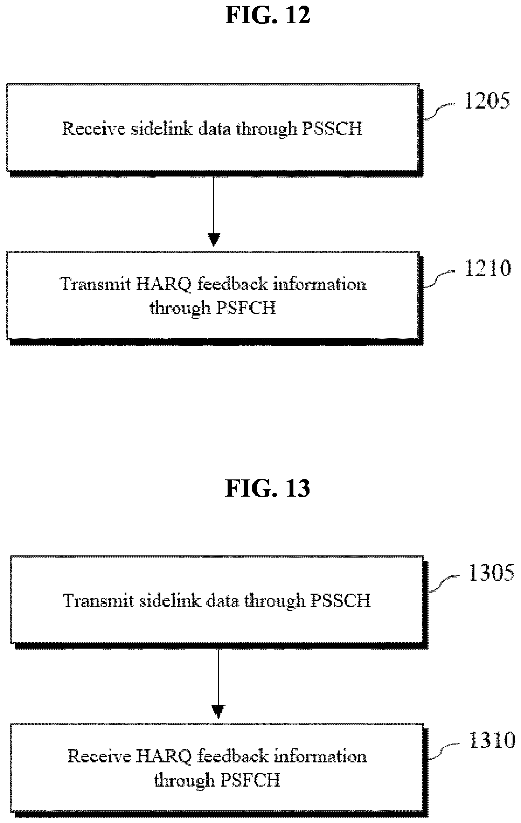

FIG. 12 illustrates a flow of a method by which a first UE transmits HARQ feedback according to an embodiment.

Referring to FIG. 12, the first UE may receive sidelink data from a second UE over a PSSCH (1205).

The first UE may transmit HARQ feedback information for the reception of the sidelink data over a PSFCH (1210).

Based on that the PSFCH transmission is performed on a shared spectrum, a plurality of symbols may be allocated for the PSFCH transmission. An OCC may be applied to remaining symbols except for a first symbol among the plurality of symbols allocated for the PSFCH transmission.

The first symbol may be an earliest symbol in a time domain among the plurality of symbols.

A number of the plurality of symbols allocated for the PSFCH transmission may be N + 1, and a length of the OCC may be N, where N may be an integer 2.

The plurality of symbols allocated for the PSFCH transmission may be TDMed within a same sidelink slot.

A same PSFCH sequence may be repeated in at least two symbols among the plurality of symbols.

The OCC may be applied independently to each of RBs allocated for the PSFCH transmission.

A first OCC may be applied to a first RB among the RBs, and a second OCC may be applied to a second RB among the RBs.

FIG. 13 illustrates a flow of a method by which a second UE receives HARQ feedback according to an embodiment.

Referring to FIG. 13, the second UE may transmit sidelink data to a first UE over a PSSCH (1305).

The second UE may receive HARQ feedback information for the reception of the sidelink data over a PSFCH (1310).

Based on that the PSFCH reception is performed on a shared spectrum, a plurality of symbols may be allocated for the PSFCH reception. An OCC may be applied to remaining symbols except for a first symbol among the plurality of symbols allocated for the PSFCH reception.

The first symbol may be an earliest symbol in a time domain among the plurality of symbols.

A number of the plurality of symbols allocated for the PSFCH reception may be N + 1, and a length of the OCC may be N, where N may be an integer 2.

The plurality of symbols allocated for the PSFCH reception may be TDMed within a same sidelink slot.

A same PSFCH sequence may be repeated in at least two symbols among the plurality of symbols.

The OCC may be applied independently to each of RBs allocated for the PSFCH reception.

A first OCC may be applied to a first RB among the RBs, and a second OCC may be applied to a second RB among the RBs.

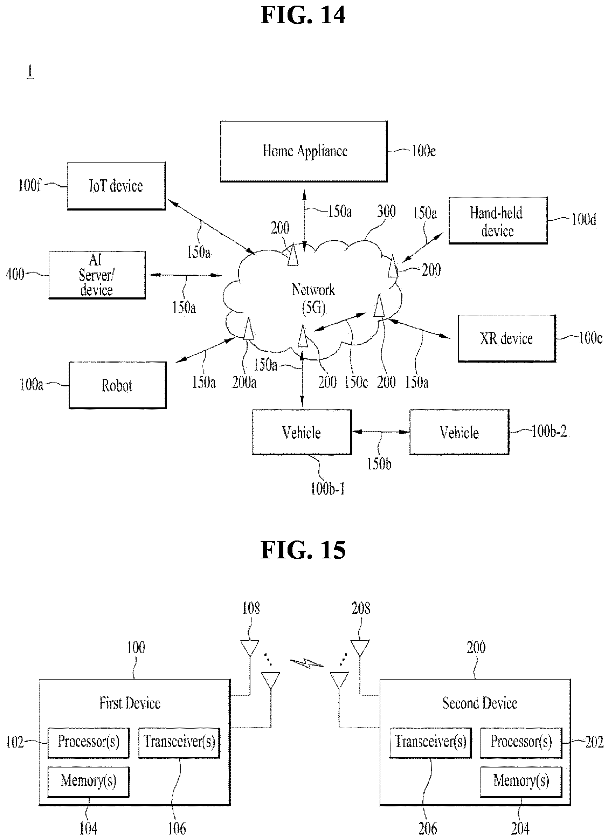

FIG. 14 illustrates a communication system 1 applied to the present disclosure.

Referring to FIG. 14, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 15 illustrates wireless devices applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

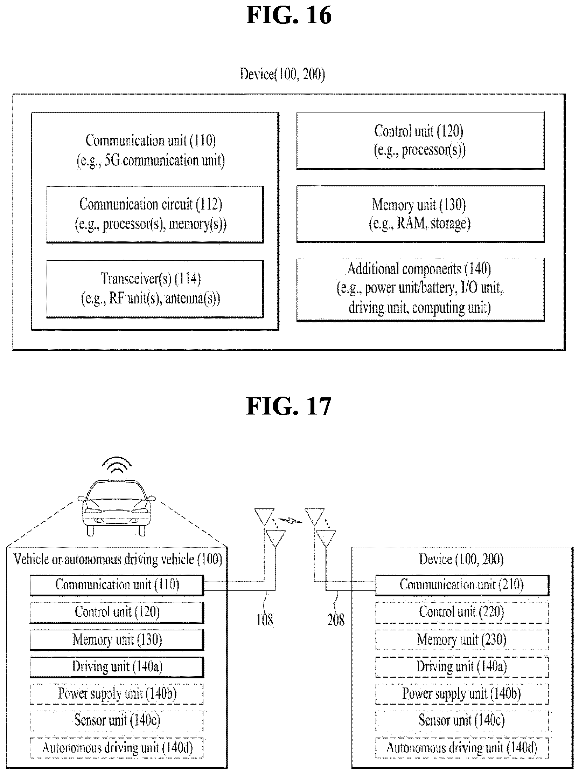

FIG. 16 illustrates another example of a wireless device applied to the present disclosure. The wireless device may be implemented in various forms according to a use-case/service (refer to FIG. 14).

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 17 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 17, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of one embodiment may be included in another embodiment or may be substituted for corresponding configurations or features of another embodiment. And, it is apparently understandable that an embodiment is configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The present disclosure is applicable to UEs, BSs, or other apparatuses in a wireless mobile communication system.

## Claims

1. A method of transmitting hybrid automatic repeat request (HARQ) feedback information by a user equipment (UE) in a wireless communication system, the method comprising:
receiving sidelink data from another UE through a physical sidelink shared channel (PSSCH); and
transmitting HARQ feedback information for the reception of the sidelink data through a physical sidelink feedback channel (PSFCH),
wherein based on that the PSFCH transmission is performed on a shared spectrum, a plurality of symbols are allocated for the PSFCH transmission, and
wherein an orthogonal covering code (OCC) is applied to remaining symbols except for a first symbol among the plurality of symbols allocated for the PSFCH transmission.

2. The method of claim 1, wherein the first symbol is an earliest symbol in a time domain among the plurality of symbols.

3. The method of claim 1, wherein a number of the plurality of symbols allocated for the PSFCH transmission is N + 1, and
wherein a length of the OCC is N.

4. The method of claim 3, wherein N is an integer 2.

5. The method of claim 1, wherein the plurality of symbols allocated for the PSFCH transmission are time-division multiplexed (TDMed) within a same sidelink slot.

6. The method of claim 1, wherein a same PSFCH sequence is repeated in at least two symbols among the plurality of symbols.

7. The method of claim 1, wherein the OCC is applied independently to each of resource blocks (RBs) allocated for the PSFCH transmission.

8. The method of claim 7, wherein a first OCC is applied to a first RB among the RBs, and
wherein a second OCC is applied to a second RB among the RBs.

9. The method of claim 1, wherein the first symbol is a symbol for automatic gain control (AGC).

10. A computer-readable recording medium having recorded thereon a program for performing the method of claim 1.

11. A device configured to transmit hybrid automatic repeat request (HARQ) feedback information in a wireless communication system, the device comprising:
a memory configured to store instructions; and
a processor configured to perform operations by executing the instructions,
wherein the operations of the processor comprise:
receiving sidelink data from another device through a physical sidelink shared channel (PSSCH); and
transmitting HARQ feedback information for the reception of the sidelink data through a physical sidelink feedback channel (PSFCH),
wherein based on that the PSFCH transmission is performed on a shared spectrum, a plurality of symbols are allocated for the PSFCH transmission, and
wherein an orthogonal covering code (OCC) is applied to remaining symbols except for a first symbol among the plurality of symbols allocated for the PSFCH transmission

12. The device of claim 11, further comprising:
a transceiver configured to transmit or receive wireless signals under control of the processor,
wherein the device is a user equipment (UE) in a wireless communication system.

13. The device of claim 11, wherein the device is an application specific integrated circuit (ASIC) or a digital signal processor configured to control a user equipment (UE).

14. A method of receiving hybrid automatic repeat request (HARQ) feedback information by a user equipment (UE) in a wireless communication system, the method comprising:
transmitting sidelink data to another UE through a physical sidelink shared channel (PSSCH); and
receiving HARQ feedback information for the transmission of the sidelink data through a physical sidelink feedback channel (PSFCH),
wherein based on that the PSFCH reception is performed on a shared spectrum, a plurality of symbols are allocated for the PSFCH reception, and
wherein an orthogonal covering code (OCC) is applied to remaining symbols except for a first symbol among the plurality of symbols allocated for the PSFCH reception.

15. A device configured to receive hybrid automatic repeat request (HARQ) feedback information in a wireless communication system, the device comprising:
a memory configured to store instructions; and
a processor configured to perform operations by executing the instructions,
wherein the operations of the processor comprise:
transmitting sidelink data to another device through a physical sidelink shared channel (PSSCH); and
receiving HARQ feedback information for the transmission of the sidelink data through a physical sidelink feedback channel (PSFCH),
wherein based on that the PSFCH reception is performed on a shared spectrum, a plurality of symbols are allocated for the PSFCH reception, and
wherein an orthogonal covering code (OCC) is applied to remaining symbols except for a first symbol among the plurality of symbols allocated for the PSFCH reception.
